(19) Europäisches Patentamt / European Patent Office / Office européen des brevets

(11) **EP 4 438 168 A1**

(12) **EUROPEAN PATENT APPLICATION**

(43) Date of publication:
**02.10.2024  Bulletin 2024/40**

(21) Application number: **23165308.0**

(22) Date of filing: **30.03.2023**

(51) International Patent Classification (IPC):
*B01J 8/00* $^{(2006.01)}$   *B01J 8/18* $^{(2006.01)}$
*B01J 8/26* $^{(2006.01)}$   *C08F 2/01* $^{(2006.01)}$
*C08F 2/34* $^{(2006.01)}$   *C08F 10/00* $^{(2006.01)}$
*B01J 19/00* $^{(2006.01)}$

(52) Cooperative Patent Classification (CPC):
(C-Sets available)
**B01J 8/1827; B01J 8/0055; B01J 8/008;
B01J 8/0085; B01J 8/1854; B01J 8/1863;
B01J 8/1872; B01J 8/26; B01J 19/002; C08F 2/01;
C08F 2/34; C08F 10/00; C08F 110/02;**
B01J 2208/00168; B01J 2208/00769;     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Basell Polyolefine GmbH
50389 Wesseling (DE)**

(72) Inventors:
• **MEI, Giulia
  44122 Ferrara (IT)**
• **MARTURANO, Lorella
  44122 Ferrara (IT)**
• **MEI, Gabriele
  44122 Ferrara (IT)**
• **BAITA, Pietro
  44122 Ferrara (IT)**

(74) Representative: **LyondellBasell
c/o Basell Polyolefine GmbH
Industriepark Hoechst, Bldg. E413
65926 Frankfurt am Main (DE)**

(54)    **FLUIDIZED BED REACTOR FOR GAS PHASE POLYMERIZATION OF OLEFINS**

(57)    A fluidized bed reactor for gas phase fluidized bed polymerization of olefins, which fluidized bed reactor comprises a first section, which is an upright cylindrical section having an inner diameter $D_1$, a height Hi and a cross sectional area $A_1$; and a frustrum shaped second section, provided vertically above the first section and centered about a common vertical axis to the upright cylindrical first section, the base of the second section having a cylindrical cross section of diameter Di and being joined to the top of the first section, the second section tapering out above its base at an angle. The second section has a maximum horizontal cross-sectional area, which is between 2.8 to 3.2 times the cross-sectional area $A_1$ of the first section, the height is between 10 to 25 m and the angle is between 5 to 15°.

EP 4 438 168 A1

(52) Cooperative Patent Classification (CPC): (Cont.)
B01J 2208/00938; B01J 2208/00991;
B01J 2219/00247; B01J 2219/00252;
B01J 2219/185; B01J 2219/1943;
B01J 2219/1946; B01J 2231/122

C-Sets
**C08F 110/02, C08F 4/6543**

## Description

FIELD OF THE DISCLOSURE

The present disclosure provides a fluidized bed reactor for gas phase fluidized polymerization of olefins that comprises a first section, which is an upright cylindrical section having a first diameter, a first height and a first cross sectional area; and a frustrum shaped second section, provided vertically above the first section, the base of the second section having a cylindrical cross section of the first diameter and being joined to the top of the first section, the second section tapering out above its base at an angle. Furthermore, The present disclosure further provides processes for preparing an olefin polymer in the fluidized bed reactor.

BACKGROUND OF THE DISCLOSURE

Gas-phase polymerization processes are economical processes for the polymerization of olefins such as homopolymerizing ethylene or propylene or copolymerizing ethylene or propylene with other olefins. Suitable reactors for carrying out such gas-phase polymerizations are for example fluidized-bed reactors, stirred gas-phase reactors or multizone circulating reactors with two distinct interconnected gas-phase polymerization zones. These processes are usually carried out in a gas phase comprising monomers and comonomers and often additionally also other gaseous components such as polymerization diluents, for example nitrogen or alkanes, or hydrogen as molecular weight modifier or low-molecular weight reaction products. The obtained products are generally solid polyolefin particles which are formed by polymerization catalyst systems usually comprising particulate catalyst solids.

Fluidized-bed reactors are reactors in which the polymerization takes place in a bed of polyolefin particles which is maintained in a fluidized state by feeding in a reaction gas mixture at the lower end of a reactor, usually below a gas distribution grid having the function of dispensing the gas flow, and taking off the gas again at the top of the fluidized-bed reactor. The reaction gas mixture is then returned to the lower end of the reactor via a recycle line equipped with a centrifugal compressor and a heat exchanger for removing the heat of polymerization. The flow rate of the reaction gas mixture has to be sufficiently high firstly to fluidize the bed of finely divided polymer present in the polymerization zone and secondly to remove the heat of polymerization effectively. In order to keep the fluidized bed at more or less constant volume, polymer product is withdrawn to compensate for the fresh polymer that is generated during the course of polymerization.

The fluidized bed reactor may be split into two sections, a first section extending towards the lower end and a second section extending from the first section towards an upper end. The first section may be an upright cylindrical section, in which the fluidized bed of particles should be maintained. The second section may be connected to the first section at a distal end of the first section facing away from the lower end. The second section may comprise a frustrum shape tapering out in a direction away from the first section at an angle. Due to the increased cross sectional area in the second section, the gas velocity is reduced such that particles are no longer entrained by the fluidizing gas. However, small particles, also known as fines may still be entrained with the fluidizing gas. These entrained fines may cause fouling in the recycle line and the components therein. In general, the increase in cross-section of the second section results in a reduction of the fluidizing gas velocity in said second section causing a drop of the entrained particles, which may cause fouling on the inner walls of the fluidized bed reactors.

There is accordingly a need to provide improved fluidized bed reactor that reduces the entrainment of small particles by the fluidizing gas, while at the same time mitigates the risk of fouling on the reactor walls.

SUMMARY OF THE DISCLOSURE

The present disclosure provides a fluidized bed reactor as defined in the outset, wherein: the second section has a maximum horizontal cross-sectional area, which is between 2.8 to 3.2 times the cross sectional area of the first section; a height of the fluidized bed reactor is between 10 to 25 m; and wherein the angle at which the second section tapers out is between 5 to 15°.

In some embodiments, the first diameter is more than 4.6 m.

In some embodiments, the fluidized bed reactor comprises a gas distribution grid and a settling pipe, the settling pipe having an upper opening integrated into the gas distribution grid, the gas distribution grid being arranged in the first section and the settling pipe extending out of the first section at one end distal to the second section.

In some embodiments, the settling pipe has a tapered end distal to the gas distribution grid.

In some embodiments, the settling pipe is arranged coaxially to the first section.

The disclosure further provides a reactor assembly comprising a series of at least two gas-phase polymerization reactors, wherein at least one of the at least two gas-phase polymerization reactors is a fluidized bed reactor as described above.

In some embodiments, the reactor assembly comprises two gas-phase polymerization reactors, wherein one gas-phase polymerization reactor is a fluidized bed reactor according to any one of the above described embodiments and the other gas-phase polymerization reactor is a multizone circulating reactor, the multizone circulating reactor being arranged downstream of the fluidized bed reactor.

The present disclosure further provides a process for preparing a polyolefin polymer from one or more olefins by gas-phase polymerization at temperatures of from 40 to 150°C and pressures of from 0.1 to 20 MPa, preferably from 0.3 MPa to 5 MPa in presence of a polymerization catalyst, wherein the polymerization is at least partly carried out in a fluidized bed reactor according to any one of the above described embodiments.

In some embodiments, a superficial gas velocity in the second section is lower than 0.30 m/s, preferably lower than 0.25 m/s. In some embodiments, the superficial gas velocity in the second section higher than 0.05 m/s, preferably higher than 0.1 m/s.

In some embodiments, a fluidization velocity is lower than 0.75 m/s, preferably lower than 0.60 m/s. In some embodiments, the fluidization velocity is higher than 0.30 m/s, preferably higher than 0.40 m/s.

In some embodiments, the polyolefin polymer is a polyethylene prepared by homopolymerizing ethylene or copolymerizing ethylene and $C_3$-$C_8$-1 alkenes, preferably by homopolymerizing ethylene.

In some embodiments, the polyethylene has a density in the range of from 0.915 $g/cm^3$ to 0.970 $g/cm^3$ preferably from 0.9600 to 0.9670 $g/cm^3$.

In some embodiments, the polyethylene has a MIE of between 7.5 to 8.5 g/10' where MIE is the melt flow index at 190°C based on 2.16 kg load determined according to ISO 1133-2:2011.

In some embodiments, the polyolefin polymer may be a monomodal polyolefin polymer.

In some embodiments of the process, a reactor assembly is provided, the reactor assembly comprising a series of at least two gas phase polymerization reactors, wherein one of the at least two gas phase polymerizations is a fluidized bed reactor according to any one of the above mentioned embodiments, and wherein the polyolefin is only prepared in the fluidized bed reactor.

In some embodiments, the reactor assembly comprises two gas phase polymerization reactors arranged in series, a first gas-phase polymerization reactor being the fluidized bed reactor and a second gas-phase polymerization reactor being a multizone circulating reactor.

In some embodiments, the first gas-phase polymerization reactor is arranged upstream from the second gas-phase polymerization reactor.

BRIEF DESCRIPTION OF THE DRAWINGS

Figure 1 shows a schematic drawing of an exemplary embodiment of a fluidized bed reactor, according to the present disclosure

Figure 2 shows schematically an exemplary embodiment of a reactor assembly comprising a fluidized bed reactor and a multizone circulating reactor.

DETAILED DESCRIPTION OF THE INVENTION

As used herein, the terms "diameter", "height" and "cross-sectional area" refer to the inner diameter, inner height and inner cross-sectional area of the corresponding section of the fluidized bed reactor. In particular, the height $H_1$ may refer to the height of the first section. In cases, in which a distribution grid is installed in the bottom of the first section, the height of the first section may correspond to the height measured from the uppermost part of the distribution grid to the end of the first section, i.e. the beginning of the second section.

It is to be understood that the term "about", in reference to a particular value, includes that exact particular value itself, irrespective of any explicit mention that that exact particular value is included. Thus, the absence of an explicit indication that the term "about" includes the particular exact recited value is not to be understood that the particular recited value is excluded from the range of variations created by the term "about"; even in the absence of an explicit indication that the term "about" includes the particular exact recited value, that exact particular value is still included in said range of variations created by the term "about". The skilled person will recognize when deviations around a stated value may be either fractional (as for example for a temperature, pressure or duration), and when such deviations may only be integral.

As used herein, the term "comprising" has the broad standard meaning "including", "encompassing", or "containing". It includes the explicitly recited elements and also allows the presence of other elements not recited. In addition to this broad encompassing meaning, as used herein, the term "comprising" may also have the limiting meaning "consisting of ". This means that any aspect or embodiment of the present application that is defined as comprising certain features, also includes the meaning of merely consisting of said features, whether this is explicitly stated or not. In addition, the term "comprising" may also have the meaning "consisting essentially of".

Any aspect, embodiment or feature of the disclosure described hereinabove or hereinbelow may be freely combined with any other aspect, embodiment or feature of the disclosure described hereinabove or hereinbelow.

Olefins which may be polymerized in the gas-phase polymerization reactors of the present disclosure are especially 1-olefins, i.e. hydrocarbons having terminal double bonds, without being restricted thereto. Preference is given to nonpolar olefinic compounds. Particularly preferred 1-olefins are linear or branched $C_2$-$C_{12}$-1-alkenes, in particular linear $C_2$-$C_{10}$-1-alkenes such as ethylene, propylene, 1-butene, 1-pentene, 1-hexene, 1-heptene, 1-octene, 1-decene or branched $C_2$-$C_{10}$-1-alkenes such as 4-methyl-1-pentene, conjugated and non-conjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The gas phase polymerization reactor may in particular be suitable for the homopolymerization or copolymerization of ethylene or propylene and is especially preferred for the homopolymerization or copolymerization of ethylene. Preferred comonomers in propylene polymerization are up to about 40 wt.% of ethylene, 1-butene and/or 1-hexene, preferably from about 0.5 wt.% to about 35 wt.% of ethylene, 1-butene and/or 1-hexene, with respect to the total weight of monomer and comonomers in the final polymer. As comonomers in ethylene polymerization, preference is given to using up to about 20 wt.%, more preferably from about 0.01 wt.% to about 16 wt.% and especially from about 0.05 wt.% to about 13 wt.% of $C_3$-$C_8$-1-alkenes, in particular 1-butene, 1-pentene, 1-hexene and/or 1-octene, with respect to the total weight of monomer and comonomers in the final polymer. Particular preference is given to polymerizations in which ethylene is copolymerized with from about 0.1 wt.% to about 13 wt.% of 1-hexene and/or 1-butene.

The present disclosure provides a fluidized bed reactor for a gas phase polymerization of olefins. The fluidized bed reactor comprises a first section, which is an upright cylindrical section having a first diameter, a height and a cross sectional area, the first height being between 10 to 25 m. Furthermore, the fluidized bed reactor comprises a second section provided vertically above the first section and centered about a common vertical axis to the upright cylindrical first section, the base of the second section having a cylindrical cross sectional area of the first diameter and being joined to the top of the first section. The second section tapers out at an angle between about 5° to about 15°. Thus, the second section is frustrum shaped, wherein the diameter gradually increases from the base in the direction away from the first section until a maximum diameter, i.e. second diameter, is reached. The maximum horizontal cross sectional area of the second section is between about 2.8 to about 3.2 times larger than the first cross sectional area.

It was thought that the increased costs of providing a large second section leads to an increase of costs due to the excess material needed to construct and support said second section outweighs any benefits coming with a larger increase of the second cross sectional area. However, it has surprisingly been found that when polymerization processes are operated in fluidized bed reactors, in which the maximum cross sectional area of the second section is about 2.8 to about 3.2, preferably about 2.9 to about 3.2, more preferably about 2.95 to about 3.2 and most preferably about 3.0 to about 3.2 times larger than the first cross sectional area, the entrainment of particles is greatly reduced preventing excessive downtime due to plugging of the distribution grid and/or heat exchanger. However, as the particles drop in the second section, they tend to adhere to the slanted walls of the second section, if the angle at which the second section tapers out is too large. If it is too low, however, the height and thus also need for space and material of the second section increases, in order to reach the desired maximum cross sectional area. It has been found that an angle at which the frustrum shaped second section tapers out, i.e. the slant angle, from 5 to 15°, preferably from 7 to 13°, more preferably from 9 to 11° allows for a good compromise between the height of the second section and the slant of the reactor wall for preventing adherence of the particles on the slanted surface.

The maximum cross sectional area of the second section is from about 2.8 to about 3.2 times or between 2.8 and 3.2 times higher than the first cross sectional area. Preferably, the maximum cross sectional area of the second section is from about 2.9 to about 3.2 or between 2.9 to 3.2 times larger than the first cross sectional area. More preferably, the maximum cross sectional area of the second section is from 2.95 to 3.15 or between 2.95 and 3.15 times higher than the first cross sectional area.

The first height may range from 8 to 30 m, preferably from 10 to 25 m, more preferably from 10 to 23 m or between 8 and 30 m, between 10 to 25 m or between 10 to 23 m.

In some embodiments, the first diameter is more than 4.6 m. Consequently, a fluidized bed reactor with a large volume can be provided increasing the production capacity of the reactor. Conventional fluidized bed reactors having a relatively large diameter in the first section, i.e. in the fluidization zone, usually have the drawback that the overall gas throughput results in an increase of particle attrition and fines generation even if the disengagement zone is increased in proportion to the fluidization zone. However, this drawback is mitigated by the fluidized bed reactor of the present disclosure, as the increased size of the maximum cross sectional area of the second section reduces the fines carryover and thus prevents fouling of components that are particularly prone to fouling, such as heat exchangers or the distribution grid.

The first diameter may be more than 4.6 m, preferably at least 5.0 m. There is no particular upper limit for the first diameter bur it is preferred that the first diameter is less than 10.0 m, preferably less than 7.0 m.

As the first section is essentially cylindrical, the horizontal cross sectional area of the first section is calculated as follows:
$$A_1 = \pi \left(\frac{D_1}{2}\right)^2$$

This means if the first diameter $D_1$ is more than 4.6 m, the first cross sectional area $A_1$ is at least 15.9 $m^2$.

The frustrum shaped second section may particularly have the shape of a truncated cone, wherein the inner diameter of the cone gradually increases above its base in the direction away from the first section, until the maximum diameter of the second section $D_{max}$ is reached. Thus, the second section may also have a circular horizontal cross sectional area, which maximum is calculated by $A_{max} = \pi \left(\frac{D_{max}}{2}\right)^2$.

Once the maximum diameter is reached the second section ends. An end section may continue from the end of the second section, e.g. as a cylindrical part having the maximum diameter of the second section. Preferably, the third section may close off the reactor as a spherical dome, either directly at the end of the second section or after an extension.

To achieve a homogenous distribution of the fluidizing gas in the bed of growing polymer particles, a gas distribution grid, also known as gas fluidization grid or distribution plate, can be installed in the lower part of the first section. Such gas distribution grids are provided with apertures which dispense into the bed a gas stream introduced under the grid itself. The grid thus also acts as support for the bed when the supply of gas is cut off.

The distribution grid may in one embodiment be integrally built together with the reactor walls. Alternatively, the distribution grid may be a separate part that may be removably or irremovably fixed to the reactor walls.

Preferably, the gas distribution grid comprises a plurality of trays arranged to form the lateral walls of an inverted cone, said plurality of trays being attached to each other to form slots in the overlapping area of adjacent trays. Such a gas distribution grid is particularly advantageous when the fluidized bed reactor has a large first diameter. Conventional gas distribution grids having the shape of a cylindrical disc, which is perforated by a large number of through-holes allowing the passage of the fluidizing gas from the zone underlying the grid to the fluidized polymer bed have the problem, once they exceed a certain size, that the distribution of the fluidizing gas through the polymer bed tends to become less homogeneous, so that dense and poorly fluidized regions appear in the bed, particularly in the vicinity of the walls of the apparatus. The preferred gas distribution grid, however, shows a particularly homogenous distribution of an upward gas flow into the vessel containing a polymer in fluidized conditions, even when the first diameter is large.

The term "gas distribution grid" indicates a grid or a plate having the function of dispensing an upward flow of gas able to maintain in fluidization conditions a polymer bed, without excluding the optional feed of a liquid together with the gas flow. As known to the skilled person in the art of olefin polymerization, the presence of little amounts of liquid monomers in the stream of fluidizing gas is generally referred to as a polymerization process operated in the "condensing mode".

The term "tray" means a flat component, like a plate or a sheet, which can be easily deformed at one of its side to generate one or more slots when overlapped with a successive, adjacent tray.

The expression "overlapping area" indicates an area where a first tray extends upon a second tray, in a way that both trays can be fixed to each other to form slots in this overlapping area.

The trays may be built of any useful material able to resist at temperatures and pressures of the polymerization process. However, it is preferred to use steel trays, since they can be easily manufactured and mounted to each other to form slots in their overlapping area. In one embodiment, the overlapping of successive trays may generate annular modules of trays, i.e. adjacent trays are mounted to each other to form a ring structure. These annular modules may be mounted side by side to generate the entire structure of the gas distributor.

In some embodiments, the gas distribution grid has the shape of an inverted cone having an apex of from 100° to 160°, preferably from 120° to 150°. The module of trays may form the lateral walls of the inverted cone.

In some embodiments, the fluidized bed reactor may comprise a settling pipe, the settling pipe having an upper opening integrated into the gas distribution grid, wherein the gas distribution grid is mounted in the first section of the fluidized bed reactor and the settling pipe extends out of the reactor volume at one end distal to the second section.

A part of the settling pipe protruding out of the reactor volume, may be provided with an inlet for introducing a fluid into the settling pipe. The settling pipe may be positioned in such a way that it is coaxially arranged to the first section. Preferably, the settling pipe is arranged substantially vertically, wherein substantially vertically means that the angle between the longitudinal direction of the settling pipe and the vertical is not more than 40° and preferably not more than 10°. In a preferred embodiment, the lower end of the settling pipe tapers conically to prevent a dead zone where polymer particles could get stuck.

Polyolefin particles coming from the fluidized bed fall due to gravity into the settling pipe and form therein a densified bed of polyolefin particles. At the lower end of the settling pipe, polyolefin particles are withdrawn and optionally transferred to a second gas-phase reactor. Consequently, the polyolefin particles within the settling pipe move downwards from top to bottom of the settling pipe driven by gravity. The polyolefin particles preferably move as plug flow from top to bottom of the settling pipe.

At its lower end, the settling pipe may be provided with a discharge valve through which the polyolefin particles are withdrawn from the settling pipe. The discharge valve may for example be a segmental ball valve, ball valve or rotary plug valve. Preferably, the discharge valve is a segmental ball valve. By regulating this valve, the discharge flow is controlled which allows keeping the bed level inside the fluidized-bed reactor constant. The discharge of the polyolefin particles can be carried out continuously or intermittently. Preferably, the discharge of the polyolefin particles is carried out continuously. In case the discharge of the polyolefin particles is carried out intermittently, the opening intervals of the valve may be selected in a way that the continuous polymerization in the fluidized bed reactor is not or at least only minimally disturbed.

The inlet may be arranged such that a fluid that is fed through said inlet into the settling pipe in such a manner that an upward stream of the fluid is induced in the bed of polyolefin particles above the fluid introduction point. Preferably, the inlet is configured to introduce the fluid into the lower third of the settling pipe and especially at a position near the lower end of the settling pipe. It is also possible to feed the fluid at more than one positions into the settling pipe. Thus, in this case, more than one inlet may be provided. A gas distributor can be provided in order to feed the fluid in a way that it is distributed over the whole cross-section of the settling pipe in a region above the fluid introduction point. The fed fluid may be a gas or a liquid which evaporates under the conditions in the settling pipe, or a mixture of a gas and such a liquid. Preferably, the fluid fed into the settling pipe is a gas. Accordingly, the introduced fluid replaces the reaction gas of the fluidized bed reactor and acts as barrier, which prevents the reaction gas of the fluidized bed reactor from being discharged and optionally transferred to a second reactor arranged downstream of the fluidized bed reactor. The introduced fluid is preferably a component of the reaction gas mixtures of the fluidized bed reactor and optionally the subsequent reactor. It is preferably an inert component and especially preferred a saturated hydrocarbon such as propane. Preferably, the amount of fed fluid is regulated in a way that an effective upward stream of the fluid in the bed of polyolefin particles above the fluid introduction point is induced and reliably sustained. It is however further preferred that a not too high amount of fluid is introduced since on the one hand an expansion of the bed in the settling pipe, which could transport polyolefins back into the fluidized bed reactor, should be avoided and, on the other hand, the higher the amount of added inert is the higher is either the dilution of the reaction gas with the fluid or the need for purging a part of reaction gas.

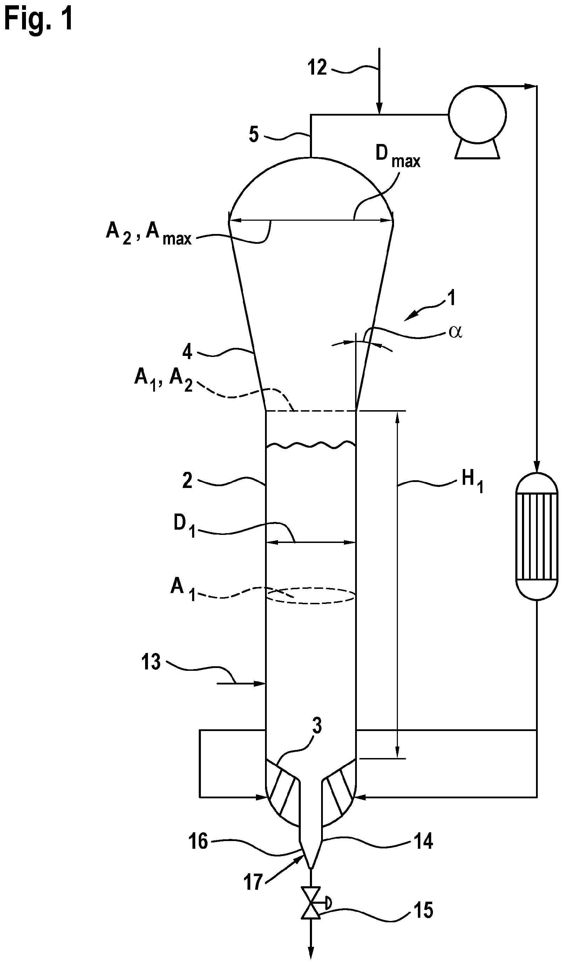

With respect to Figure 1, there is shown a fluidized bed reactor 1 comprising an upright cylindrically shaped first section 2, a gas distribution grid 3 mounted in a lower part of the first section 2 and frustrum shaped second section 4 which is placed vertically above the first section 2 and tapering out in a direction away from the first section 2.

The first section is known as a fluidization zone, in which during operation a fluidized bed of polymer is formed by an upwardly flow of gas fed through the gas distribution grid 3. The first section 2 has a diameter $D_1$ and a height $H_1$ measured from the uppermost part of the distribution grid to the end of the first section. The height $H_1$ is between about 10 to 25 m. The first section 2 is preferably cylindrical such that it has a circular cross

sectional area $A_1$. The cross sectional area $A_1$ may be constant over the entire height of the first section 2.

The second section 4 may have a circular cross sectional area $A_2$, wherein the cross sectional area of the second section gradually increases with increasing distance in the vertical direction from the first section, until a maximum horizontal cross sectional area $A_{max}$ is reached. At the interface between the first section and the second section, the horizontal cross sectional areas can be identical. In order to prevent excessive particle accumulation on the sloped surface of the second section, an angle $\alpha$ at which the second section tapers out from the first section is kept from 5 to 15°, preferably from 7 to 13°, more preferably from 9 to 11°. Due to the increase of cross sectional area $A_2$ with increasing height until $A_{max}$ is reached, the superficial fluidization velocity is reduced and solid particles are no longer entrained with the gas flow. It has been found that particle entrainment can be significantly reduced when $A_{max}$ is 2.8 to about 3.2 times or between 2.8 and 3.2 times higher than $A_1$. Preferably, the $A_{max}$ is from about 2.9 to about 3.2 or between 2.9 to 3.2 times larger than $A_1$. More preferably, the $A_{max}$ is from 2.95 to 3.15 or between 2.95 and 3.15 times higher than $A_1$. In the most preferred embodiment, $A_{max}$ is more than 2.9 times larger than $A_1$.

The top of the second section 4 may be closed off by a dome shaped third section, the dome shaped third section being provided with a recycle line 5. The gaseous stream of the reaction gas leaving the top of the second section via the recycle line 5 may be compressed by a compressor 6 and transferred to a heat exchanger 7, in which the recycle gas is cooled. Below heat exchanger 7, the gas recycle line may split in two branches 8a and 8b, which are horizontally connected with the fluidized bed reactor 1 at positions 9a and 9b below the gas distribution grid 3. The recycle gas can, if appropriate, be cooled to below the dew point of one or more of the recycle gas components in the heat exchanger so as to operate the reactor with condensed material, i.e. in the condensing mode. The recycle gas can comprise, besides unreacted monomers, inert condensable gases, such as alkanes, as well as inert non-condensable gases, such as nitrogen.

Make-up monomer, molecular weight regulators, and optional inert gases can be fed into the reactor 1 at various positions, for example via line 12 upstream of the compressor 6. Catalyst may be fed into the reactor 1 via line 13 that is preferably placed in the lower part of the fluidized bed.

As is shown in Fig. 1, the gas distribution grid 3 may have the shape of an inverted cone, wherein a settling pipe 14 is provided, the settling pipe 14 having an upper opening integrated into the gas distribution grid 3. Thus, the gas distribution grid and the settling pipe 14 form a funnel, wherein the settling pipe extends out of the first section 2 at an end distal from the second section. Preferably, the settling pipe projects out of the first section 2. The upper opening of the settling pipe 14 may be located in a central position with respect to the gas distribution grid 3, in particular, the settling pipe may be arranged coaxially with the first section and/or second section. At its lower end, the settling pipe may taper inwards. A discharge valve 15 may be provided downstream the settling pipe 14 for withdrawing the packed bed of polyolefin particles which forms within the settling pipe. The settling pipe 14 further comprises at least one inlet 16. The inlet 16 may be arranged such that a fluid that is fed through said inlet into the settling pipe in such a manner that an upward stream of the fluid is induced in the bed of polyolefin particles above the fluid introduction point. Preferably, the inlet is configured to introduce the fluid into the lower third of the settling pipe and especially at a position near the lower end of the settling pipe. It is also possible to feed the fluid at more than one positions into the settling pipe. Thus, in this case, more than one inlet may be provided. The fluid is preferably a gas which is feed via feeding line 17.

During operation of the fluidized-bed reactor 1, the settling pipe 14 contains a bed of polyolefin particles which moves from top to bottom of the settling pipe. The polyolefin particles enter the settling pipe 14 through the upper opening and the polyolefin particles may be withdrawn, preferably continuously, through discharge valve 15, which is preferably a segmental ball valve.

Propane may be fed via line 17 into the settling pipe, preferably at a position near the lower end of the settling pipe in an amount that an upward stream of the propane is induced in the bed of polyolefin particles.

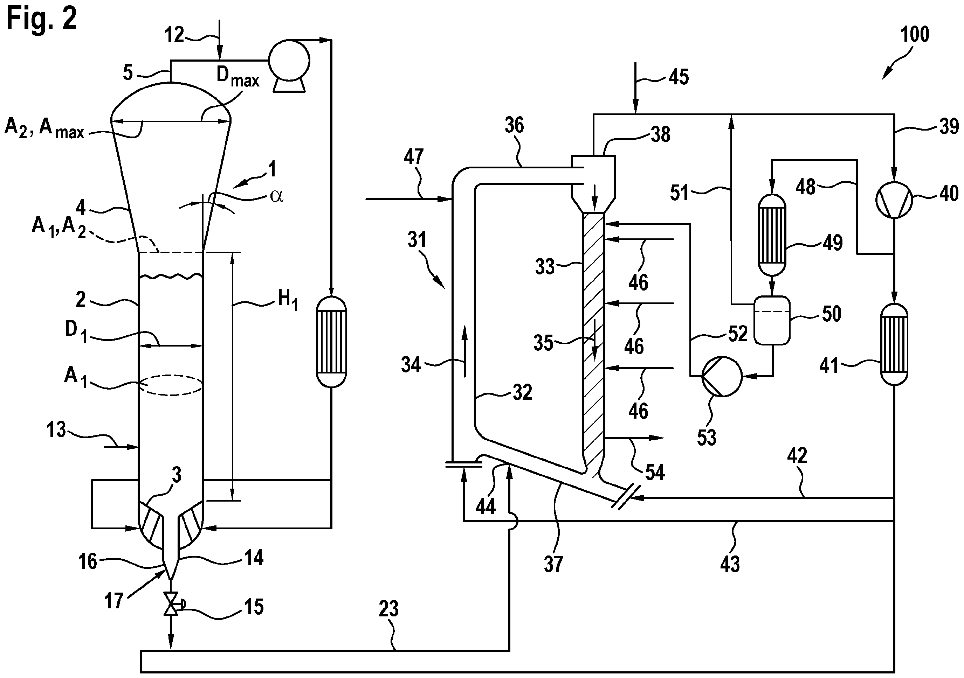

The fluidized bed reactor of the present disclosure may be a standalone reactor as shown in Fig. 1 or part of a reactor assembly comprising two or more reactors arranged in series. An exemplary embodiment of such a reactor assembly 100 is shown in Fig. 2.

Fig. 2 shows a series of two reactors, a fluidized bed reactor 1 and a multizone circulating reactor 31, the multizone circulating reactor 31 being arranged downstream of the fluidized bed reactor. Thus, the discharge valve 15 may be arranged above a transfer line 23 for transferring the polyolefin particles to the multizone circulating reactor 31. The multizone circulating reactor 31 is a gas-phase reactor with two reaction zones, riser 32 and downcomer 33, which are repeatedly passed by the polyolefin particles.

Within riser 32, the polyethylene particles flow upward under fast fluidization conditions along the direction of arrow 34. Within downcomer 33 the polyolefin particles flow downward under the action of gravity along the direction of arrow 35. The riser 32 and the downcomer 33 are appropriately interconnected by the interconnection bends 36 and 37.

After flowing through the riser 32, the polyethylene particles and the gaseous mixture leave the riser 32 and are conveyed to a solid/gas separation zone 38. This solid/gas separation can be effected by using conventional separation means such as, for example, a centrifugal separator like a cyclone. From the separation zone 38 the polyolefin particles enter the downcomer 33.

The gaseous mixture leaving the separation zone 38 is recycled to the riser 32 by means of a recycle line 39, equipped with a compressor 40 and a heat exchanger 41. Downstream of the heat exchanger 41 the recycle line 39 splits and the gaseous mixture is divided into three separated streams: line 42 conveys a part of the recycle gas into the interconnection bend 37, line 43 conveys another part the recycle gas to the bottom of the riser 32, so as to establish fast fluidization conditions therein, and a further part of the recycle gas is conveyed through transfer line 23 for transferring the polyethylene particles obtained in fluidized-bed reactor 1 into multizone circulating gas-phase reactor 31. The polyethylene particles coming from the first gas-phase reactor via enter the multizone circulating gas-phase reactor 31 at the interconnection bend 37 in position 44.

Make-up monomers, make-up comonomers, and optionally inert gases or process additives can be fed to the multizone circulating reactor 31 via one, two or more lines 45 or 46, suitably placed at any point of the gas recycle line 39 or the downcomer 33. A preferred route for feeding process additives such as antistatic agents is further feeding the additives via line 47.

A part of the gaseous mixture leaving the separation zone 38 exits recycle line 39 after the compressor 40 and is sent through line 48 to heat exchanger 49 where it is cooled to a temperature at which the monomers and the optional inert gas are partially condensed. A separating vessel 50 is placed downstream the heat exchanger 49. The separated gaseous mixture is recirculated through line 51 to recycle line 39 and the separated liquid is fed to the downcomer 33 through line 52 by means of pump 53.

The polyethylene particles obtained in the multizone circulating reactor 31 are continuously discharged from the bottom part of downcomer 33 via discharge line 54.

Usually, the fluidized bed reactor and the multizone circulating reactor are operated simultaneously, such that the polyolefin particles are split between the first reactor and the second reactor. For example, the process may be designed for a 50:50 split of the polyolefin throughput between the two reactors. Thus, conventionally the fluidized bed reactors are designed to be at full capacity at that 50:50 split. However, in one embodiment, the fluidized bed reactor may be oversized, such that the fluidized bed reactor has the capacity of running at a 100:0 split at the same throughput. Thus, in one embodiment, the reactor assembly may be provided, wherein only the fluidized bed reactor is used to prepare the polyolefin. Preferably, the fluidized bed reactor can produce a monomodal polyolefin at an hourly capacity, which is equal to the hourly capacity of the production of a bimodal or multimodal polyolefin in the series of reactors. I.e. if the system has a capacity of 28.5 t/h in the first reactor and a capacity of 28.5 t/h in the second reactor, when running the process at a 50:50 split, then it is preferred that the fluidized bed reactor is configured to run at a 57.0 t/h capacity at a 100:0 split.

The present disclosure further provides a process for preparing an olefin polymer. Olefins for preparing the olefin polymer are especially 1-olefins, i.e. hydrocarbons having terminal double bonds, without being restricted thereto. Preference is given to nonpolar olefinic compounds. Particularly preferred 1-olefins are linear or branched $C_2$-$C_{12}$-1-alkenes, in particular linear $C_2$-$C_{10}$-1-alkenes such as ethylene, propylene, 1-butene, 1-pentene, 1-hexene, 1-heptene, 1-octene, 1-decene or branched $C_2$-$C_{10}$-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins, for example mixtures of two, three or four olefins.

The olefin polymer can be obtained by homopolymerizing an olefin or by copolymerizing an olefin and one or more other olefins. The olefin polymer can in particular be obtained by homopolymerizing or copolymerizing ethylene or propylene, and especially by homopolymerizing or copolymerizing ethylene. Preferred comonomers in propylene polymerization are up to 60 wt.% of ethylene, 1-butene and/or 1-hexene, preferably from 0.5 wt.% to 35 wt.% of ethylene, 1-butene and/or 1-hexene. As comonomers in ethylene polymerization, preference is given to using up to 20 wt.%, more preferably from 0.01 wt.% to 15 wt.% and especially from 0.05 wt.% to 12 wt.% of $C_3$-$C_8$-1-alkenes, in particular 1-butene, 1-pentene, 1-hexene and/or 1-octene. Particular preference is given to olefin polymers in which ethylene is copolymerized with from 0.1 wt.% to 12 wt.% of 1-hexene and/or 1-butene.

In the process of the present disclosure, the homopolymerization of an olefin or the copolymerization an olefin and one or more other olefins is carried out at temperatures in the range from 20°C to 200°C, preferably from 30°C to 150°C and particularly preferably from 40°C to 130°C, and pressures from 0.1 MPa to 20 MPa and particularly preferably from 0.3 MPa to 5 MPa in the presence of a solid particulate polymerization catalyst and an organometallic compound, which are fed, together with the olefin or the combination of an olefin and one or more other olefins, into a polymerization apparatus comprising a polymerization reactor or a combination of polymerization reactors.

The polymerization catalyst may be any customary solid particulate polymerization catalysts which can be used in the polymerization of olefins in combination with an organometallic compound as cocatalyst. That means, the polymerization can be carried out using Phillips catalysts based on chromium oxide, using Ziegler- or Ziegler-Natta-catalysts, or using single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler or Ziegler-Natta type, preferably comprising a compound of titanium or vanadium, a compound of magnesium and optionally an electron donor compound and/or a particulate inorganic oxide as a support material. As titanium compounds, use is generally made of the halides or alkoxides of trivalent or tetravalent titanium, with titanium alkoxy halogen compounds or mixtures of various titanium compounds also being possible. Preference is given to using titanium compounds which comprise chlorine as the halogen. In the production of the solid component, at least one compound of magnesium is preferably additionally used. Suitable compounds of this type are halogen-comprising magnesium compounds such as magnesium halides and in particular the chlorides or bromides and magnesium compounds from which the magnesium halides can be obtained in a customary way, e.g. by reaction with halogenating agents. As magnesium compounds for producing the particulate solids, preference is given to using, apart from magnesium dichloride or magnesium dibromide, the di($C_1$-$C_{10}$-alkyl)magnesium compounds. Suitable electron donor compounds for preparing Ziegler or Ziegler-Natta type catalysts are for example alcohols, glycols, esters, ketones, amines, amides, nitriles, alkoxysilanes and aliphatic ethers. These electron donor compounds can be used alone or in mixtures with each other as well as with additional electron donor compounds. Preferred electron donor compounds are selected from the group consisting of amides, esters, and alkoxysilanes.

Preferred catalysts are also Phillips-type chromium catalyst, which are preferably prepared by applying a chromium compound to an inorganic support and subsequently activating the obtained catalyst precursor at temperatures in the range from 350 to 1000°C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc. Combinations of the abovementioned elements are also possible. The catalyst precursor can be doped with fluoride prior to or during activation. As supports for Phillips-type catalysts, mention may be made of aluminum oxide, silicon dioxide (e.g. in form of silica gel), titanium dioxide, zirconium dioxide or their mixed oxides or cogels, or aluminum phosphate. Further suitable support materials can be obtained by modifying the pore surface area, e.g. by means of compounds of the elements boron, aluminum, silicon or phosphorus. Preference is given to using a silica gel. Preference is given to spherical or granular silica gels, with the former also being able to be spray dried. The activated chromium catalysts can subsequently be prepolymerized or prereduced. The prereduction is usually carried out by means of cobalt or else by means of hydrogen at 250°C to 500°C, preferably at 300°C to 400°C, in an activator.

Preferred catalysts for the process of the present disclosure are also supported single-site catalysts. Particularly suitable are those comprising bulky sigma- or pi-bonded organic ligands, e.g. catalysts based on mono-Cp complexes, catalysts based on bis-Cp complexes, which are commonly designated as metallocene catalysts, or catalysts based on late transition metal complexes, in particular iron-bisimine complexes. Further preferred catalysts are mixtures of two or more single-site catalysts or mixtures of different types of catalysts comprising at least one single-site catalyst. The materials suitable as support for the Phillips-type chromium catalyst are also useful as support for the single-site catalysts.

The solid particulate polymerization catalysts employed in the process of the present disclosure are used in combination with an organometallic compound. Preferred organometallic compounds are organometallic compounds of metals of Groups 1, 2, 12, 13 or 14 of the Periodic Table of Elements, in particular organometallic compounds of metals of Group 13 and especially organoaluminum compounds. Preferred organometallic compounds are for example organometallic alkyls, organometallic alkoxides, or organometallic halides.

The organometallic compounds serve on the one hand as cocatalysts for the solid particulate polymerization catalysts and are on the other hand scavengers which react with polar compounds which might be brought into the polymerization reactor and which could act as catalyst poisons.

Preferred organometallic compounds are lithium alkyls, magnesium or zinc alkyls, magnesium alkyl halides, aluminum alkyls, silicon alkyls, silicon alkoxides or silicon alkyl halides. More preferably, the organometallic compounds are aluminum alkyls or magnesium alkyls. Still more preferably, the organometallic compounds are aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

In especially preferred embodiments of the present disclosure, the polymerization process is carried out as gas-phase polymerization, i.e. by a process in which the solid polymers are obtained from a gas-phase of the monomer or the comonomers. Such gas-phase polymerizations are usually carried out at pressures of from 0.1 MPa to 20 MPa, preferably from 0.5 MPa to 10 MPa and in particular from 1.0 MPa to 5.0 MPa and polymerization temperatures from 40°C to 150°C and preferably from 65°C to 125°C.

The gas-phase polymerization processes according to the present disclosure are preferably carried out in the presence of a $C_3$-$C_5$ alkane as polymerization diluent and more preferably in the presence of propane, especially in the case of homopolymerization or copolymerization of ethylene.

In order to reduce the amount of fine particles being entrained into the recycle line, it is preferred that the superficial gas velocity in the second section, in particular at the maximum cross section $A_{max}$, is lower than 0.30 m/s, preferably lower than 0.25 m/s and higher than 0.05 m/s, preferably higher than 0.1 m/s. The superficial gas velocity in the first section, i.e. the fluidization velocity is preferably lower than 0.75 m/s, more preferably lower than 0.60 m/s, and preferably higher than 0.30 m/s, preferably higher than 0.40 m/s.

The different or else identical polymerization reactors can also, if desired, be connected in series and thus form a polymerization cascade. A parallel arrangement of reactors using two or more different or identical polymerization methods is also possible.

In particularly preferred embodiments of the present disclosure, the process for preparing an olefin polymer is carried out in a series of two or more gas-phase reactors. More preferably, the polymerization of olefins is carried out in a series comprising a fluidized-bed reactor and a multizone circulating reactor. Preferably the fluidized-bed reactor is arranged upstream of the multizone circulating reactor. Such a series of gas-phase reactors may also further comprise additional polymerization reactors. These additional reactors can be any kind of low-pressure polymerization reactors such as gas-phase reactors or suspension reactors and may also include a pre-polymerization stage.

The reactor cascade may preferably comprise a fluidized bed reactor according to the present disclosure and a second gas phase reactor arranged downstream of the fluidized bed reactor. The second gas phase reactor may for example be a multizone circulating reactor. Preferably, the reactor cascade may be configured to allow the preparation of the polyolefin, in particular of polyethylene, in all reactors or just in the fluidized bed reactor. Consequently, the reactor cascade may have an operation mode in which only the fluidized bed reactor is used. For this, the fluidized bed reactor may comprise a diameter of more than 4.6 meters at the fluidization zone.

The process may particularly prepare a polyolefin composition, the polyolefin composition being polyethylene composition prepared by the process may have a density in the range of from 0.915 g/cm³ to 0.970 g/cm³. Preferably the process may be adapted to prepare a monomodal high density polyethylene composition in the fluidized bed reactor having a density of 0.945 to 0.970 g/cm³. Alternatively, the process may be adapted to prepare a bimodal or multimodal high density polyethylene composition in a series of reactors, the polyethylene having a density of 0.940 to 0.960 g/cm$^3$, wherein the polyethylene produced in the first reactor of the series of reactors has a density higher than 0.950 g/cm$^3$. In some embodiments, the process may be adapted to prepare a monomodal linear low density polyethylene composition having a density of 0.915 g/cm$^3$ to 0.930 g/cm$^3$. In some embodiments, the process may be adapted to prepare a monomodal medium density polyethylene composition of 0.930 to 0.940.

Examples

A series of a fluidized-bed reactor and a multizone circulating reactor (MZCR) having two interconnected reaction zones, a number of grades of a multimodal ethylene polymer were produced with an average output of 57 t/h with a 50/50 split at temperatures in the range from 60°C to 110°C and pressures from 1 MPa to 10 MPa.

The catalyst system for carrying out the polymerizations was a Ziegler-Natta catalyst system comprising a catalyst solid prepared by supporting TiCl4 on a MgCl$_2$ carrier. The catalyst was fed to the fluidized-bed reactor at a rate from 4.0 to 6.0 kg/h, preferably from 4.5 to 5.5 kg/h. Triisobutylaluminum and Diethylaluminumchlorine were employed as cocatalysts and fed to the polymerizations at feeding total rates in the range from 20 kg/h to 30 kg/h . In the examples, the fluidized-bed reactor is operated on its own without the multizone circulating reactor for producing monomodal polyethylene grades having a density of from 0.9600 g/cm$^3$ to 0.9670 g/cm$^3$, preferably, from 0.9610 g/cm$^3$ to 0.9660 g/cm$^3$ determined according to ISO 1183-1:2012 at 23°C and a MIE of about 7.5 to 8.5, where MIE is the melt flow index at 190°C based on 2.16 kg load determined according to ISO 1133-2:2011.

A typical commercial reactor has been modelled. In the Comparative Example A and B and Example 1 according to the disclosure, the same fluidizing gas was used. The fluidized bed reactors are designed for producing bimodal or multimodal grades in a reactor cascade, the fluidized bed reactor in the cascade having a throughput of 28.5 t/h and the catalyst having an average residence time of 3.15 h in the fluidized bed reactor. The fluidization velocity is about 0.75 m/s. The fluidization velocity is determined by a compressor having a capacity of 44900 m$^3$/h.

Comparative Example A

In Comparative Example A, the fluidized bed reactor has a diameter, $D_1$, of 4.6 m in the cylindrical first section, and a maximum diameter of the second section, Dmax, of 7.3 m (area ratio $A_{max}/A_1$ = 2.52). The height of the first section, $H_1$, is 20 m.

Subsequently, the fluidized bed reactor was operated to produce a monomodal high density polyethylene with a catalyst residence time of 2 h and a fluidization velocity of about 0.75 m/s. The resulting max production is 44.9 t/h only, whereas excessive carry over occurred resulting in frequent shutdowns due to plugging of the heat exchanger and/or distribution grid.

Comparative Example B

In Comparative Example B, the second section has been adapted such that Dmax is increased to 8.9 m, while the diameter $D_1$ is kept at 4.6 resulting in an area ratio $A_{max}/A_1$ of about 3.74. The cylindrical first section has not been modified. The fluidized bed reactor is operated with the same compressor capacity as in Comparative Example A and a catalyst residence time of about 2 h.

The first section has not been modified. The resulting maximum throughput is 44.9 t/h even though the total volume of the reactor has increased significantly. The increased diameter of the second section resulted in less entrainment of particles and thus the likelihood of plugging the heat exchanger and/or distribution grid is reduced. However, a larger amount of fines accumulating on the sloped surface of the second section has been noticed, which is attributed to the second section widening at an angle close to the horizontal, i.e. more than 15°, in particularly more than 20°.

Example 1

In Example 1, both the first section and the second section have been modified. The diameter $D_1$ was increased to 5.2 m while maintaining the same height $H_1$. The compressor capacity was maintained leading to a lower fluidization velocity. The second section has been configured such that the ratio $A_{max}/A_1$ is about 2.98 while the angle $\alpha$ is about 10°. The superficial gas velocity measured in the second section is lower than 0.25 m/s. A significantly lower fines circulation has been witnessed, while the average particle size of the fines collected from the recycle line is lower than 180 $\mu$m. Furthermore, fines accumulation on the sloped surfaces has been mitigated.

The total volume of the reactor has increased significantly compared to Comparative Example A but in contrast to Comparative Example B, the increase of volume is caused mainly attributed to the first section. When operating the process at a residence time of 2 h, the maximum throughput is increased to 57 t/h.

**Claims**

1.  A fluidized bed reactor for gas phase fluidized bed polymerization of olefins, which fluidized bed reactor comprises:

    - a first section, which is an upright cylindrical section having a diameter $D_1$, a height $H_1$ and

a cross sectional area $A_1$; and
- a frustrum shaped second section, provided vertically above the first section and centered about a common vertical axis to the upright cylindrical first section, the base of the second section having a cylindrical cross section of diameter $D_1$ and being joined to the top of the first section, the second section tapering out above its base at an angle $\alpha$,

**characterized in that:**

i) the second section has a maximum horizontal cross-sectional area $A_2$, which is between 2.8 to 3.2 times the cross sectional area $A_1$ of the first section;
ii) the height $H_1$ is between 10 to 25 m; and
iii) the angle $\alpha$ is between 5 to 15°.

2. The fluidized bed reactor of claim 1, wherein the diameter $D_1$ is more than 4.6 m.

3. The fluidized bed reactor of claim 1 or 2, wherein the fluidized bed reactor comprises a gas distribution grid and a settling pipe, the settling pipe having an upper opening integrated into the distribution grid, the gas distribution grid being arranged in the first section and the settling pipe extending out of the first section at one end distal to the second section.

4. The fluidized bed reactor of claim 3, wherein the settling pipe has a tapered end distal to the gas distribution grid.

5. The fluidized bed reactor of claim 3 or 4, wherein the settling pipe is arranged coaxially to the first section.

6. A reactor assembly comprising a series of at least two gas-phase polymerization reactors, wherein at least one of the at least two gas-phase polymerization reactors is a fluidized bed reactor according to any one of claims 1 to 5.

7. The reactor assembly of claim 6, wherein the reactor assembly comprises two gas-phase polymerization reactors, wherein one gas-phase polymerization reactor is an fluidized bed reactor according to any one of claims 1 to 5 and the other gas-phase polymerization reactor is a multizone circulating reactor, the multizone circulating reactor being arranged downstream of the fluidized bed reactor.

8. A process for preparing a polyolefin polymer from one or more olefins by gas-phase polymerization at temperatures of from 40 to 150°C and pressures of from 0.1 to 20 MPa in presence of a polymerization catalyst, wherein the polymerization is at least partly carried out in a fluidized bed reactor according to any one of claims 1 to 5.

9. The process of claim 8, wherein gas velocity in the second section is lower than 0.30 m/s, preferably lower than 0.25 m/s.

10. The process of claim 8 or 9, wherein the fluidization velocity is lower than 0.75 m/s, preferably lower than 0.60 m/s.

11. The process of any one of claims 8 to 10, wherein the polyolefin polymer is a polyethylene prepared by homopolymerizing ethylene or copolymerizing ethylene and $C_3$-$C_8$-1-alkenes.

12. The process of claim 11, wherein the polyethylene has a density in the range of from 0.915 $g/cm^3$ to 0.970 $g/cm^3$.

13. The process of any one of claims 8 to 12, wherein a reactor assembly is provided, the reactor assembly comprises a series of at least two gas phase polymerization reactors, one of the at least two gas phase polymerization reactors being the fluidized bed reactor according to claims 1 to 5, and wherein the polyolefin is only prepared in the fluidized bed reactor.

14. The process of claim 13, wherein the reactor assembly comprises two gas phase polymerization reactors arranged in series, a first gas-phase polymerization reactor being the fluidized bed reactor and a second gas-phase polymerization reactor being multizone circulating reactor.

15. The process of claim 14, wherein the first gas-phase polymerization reactor is arranged upstream from the second gas-phase polymerization reactor.

# Fig. 1

**Fig. 2**

Europäisches
Patentamt

European
Patent Office

Office européen
des brevets

# EUROPEAN SEARCH REPORT

**Application Number**

EP 23 16 5308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 264 506 A (EISINGER RONALD S [US] ET AL) 23 November 1993 (1993-11-23) | 1,8-12 | INV. B01J8/00 |
| Y | * abstract; claim 1; figure 1; example 1 * * column 4, lines 58-61 * * column 8, lines 52-55 * * column 5, lines 1-7 * | 3-15 | B01J8/18 B01J8/26 C08F2/01 C08F2/34 C08F10/00 |
| Y | US 2021/214472 A1 (BAITA PIETRO [IT] ET AL) 15 July 2021 (2021-07-15) * abstract; claims 1, 11, 14, 15; figures 1, 3 * * paragraph [[0080]] * | 3-15 | B01J19/00 |
| X | US 8 968 686 B2 (SHAIKH ASHFAQ [US]; WONDERS ALAN GEORGE [US] ET AL.) 3 March 2015 (2015-03-03) * abstract; figure 1 * * column 11, lines 26-27 * * column 14, lines 25-39 * * claim 4 * | 1,2 | |
| A | US 7 915 357 B2 (UNIVATION TECH LLC [US]) 29 March 2011 (2011-03-29) * abstract; claims 1, 18-20; figure 1 * * column 8, lines 50-64 * | 1-15 | TECHNICAL FIELDS SEARCHED (IPC) B01J C08F |
| A | US 8 314 198 B2 (DUMAS THIBAULT [FR]; RAMSAY KEVIN PETER [GB]; INEOS EUROPE LTD [GB]) 20 November 2012 (2012-11-20) * claim 1; figure 1 * | 1-15 | |

The present search report has been drawn up for all claims

| Place of search | Date of completion of the search | Examiner |
|---|---|---|
| Munich | 5 September 2023 | Biscarat, Jennifer |

EPO FORM 1503 03.82 (P04C01)

## ANNEX TO THE EUROPEAN SEARCH REPORT
## ON EUROPEAN PATENT APPLICATION NO.

EP 23 16 5308

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2023

| Patent document cited in search report | | | Publication date | Patent family member(s) | | | Publication date |
|---|---|---|---|---|---|---|---|
| US 5264506 | | A | 23-11-1993 | AT | 141292 | T | 15-08-1996 |
| | | | | BR | 9305284 | A | 05-07-1994 |
| | | | | CA | 2112544 | A1 | 01-07-1994 |
| | | | | CN | 1090585 | A | 10-08-1994 |
| | | | | DE | 69304032 | T2 | 23-01-1997 |
| | | | | EP | 0605001 | A1 | 06-07-1994 |
| | | | | ES | 2093353 | T3 | 16-12-1996 |
| | | | | JP | 3001762 | B2 | 24-01-2000 |
| | | | | JP | H06228229 | A | 16-08-1994 |
| | | | | KR | 940014451 | A | 18-07-1994 |
| | | | | US | 5264506 | A | 23-11-1993 |
| | | | | ZA | 939761 | B | 18-08-1994 |
| US 2021214472 | | A1 | 15-07-2021 | BR | 112020014953 | A2 | 22-12-2020 |
| | | | | CN | 111629823 | A | 04-09-2020 |
| | | | | EP | 3524343 | A1 | 14-08-2019 |
| | | | | EP | 3723898 | A1 | 21-10-2020 |
| | | | | JP | 7266651 | B2 | 28-04-2023 |
| | | | | JP | 2021507082 | A | 22-02-2021 |
| | | | | JP | 2022000516 | A | 04-01-2022 |
| | | | | KR | 20200104414 | A | 03-09-2020 |
| | | | | RU | 2743991 | C1 | 01-03-2021 |
| | | | | US | 2021214472 | A1 | 15-07-2021 |
| | | | | WO | 2019154756 | A1 | 15-08-2019 |
| US 8968686 | | B2 | 03-03-2015 | BR | 112012018896 | A2 | 12-04-2016 |
| | | | | CA | 2787901 | A1 | 04-08-2011 |
| | | | | CN | 102811994 | A | 05-12-2012 |
| | | | | EP | 2528887 | A1 | 05-12-2012 |
| | | | | ES | 2669568 | T3 | 28-05-2018 |
| | | | | JP | 6329117 | B2 | 23-05-2018 |
| | | | | JP | 2013518105 | A | 20-05-2013 |
| | | | | JP | 2016040312 | A | 24-03-2016 |
| | | | | KR | 20120120952 | A | 02-11-2012 |
| | | | | KR | 20180067734 | A | 20-06-2018 |
| | | | | KR | 20200058607 | A | 27-05-2020 |
| | | | | LT | 2528887 | T | 25-05-2018 |
| | | | | MX | 344136 | B | 06-12-2016 |
| | | | | PL | 2528887 | T3 | 31-07-2018 |
| | | | | PT | 2528887 | T | 06-06-2018 |
| | | | | RU | 2012136134 | A | 27-02-2014 |
| | | | | US | 2011190537 | A1 | 04-08-2011 |
| | | | | WO | 2011093950 | A1 | 04-08-2011 |
| US 7915357 | | B2 | 29-03-2011 | AU | 2006276092 | A1 | 08-02-2007 |
| | | | | BR | PI0613977 | A2 | 22-02-2011 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 16 5308

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2023

| Patent document cited in search report | | Publication date | Patent family member(s) | | Publication date |
|---|---|---|---|---|---|
| | | | CA 2614238 A1 | | 08-02-2007 |
| | | | CN 101228195 A | | 23-07-2008 |
| | | | CN 103450382 A | | 18-12-2013 |
| | | | EP 1907430 A1 | | 09-04-2008 |
| | | | ES 2398285 T3 | | 15-03-2013 |
| | | | JP 5337484 B2 | | 06-11-2013 |
| | | | JP 2009503189 A | | 29-01-2009 |
| | | | KR 20080031977 A | | 11-04-2008 |
| | | | MY 148073 A | | 28-02-2013 |
| | | | TW 200712062 A | | 01-04-2007 |
| | | | US 2007027276 A1 | | 01-02-2007 |
| | | | US 2010160580 A1 | | 24-06-2010 |
| | | | WO 2007015927 A1 | | 08-02-2007 |
| | | | ZA 200710918 B | | 25-09-2008 |
| US 8314198 B2 | | 20-11-2012 | BR PI0920734 A2 | | 29-12-2015 |
| | | | CN 102170965 A | | 31-08-2011 |
| | | | EP 2174706 A1 | | 14-04-2010 |
| | | | EP 2331250 A1 | | 15-06-2011 |
| | | | ES 2386949 T3 | | 07-09-2012 |
| | | | KR 20110081175 A | | 13-07-2011 |
| | | | RU 2011117063 A | | 10-11-2012 |
| | | | US 2011152489 A1 | | 23-06-2011 |
| | | | WO 2010037653 A1 | | 08-04-2010 |

EPO FORM P0459

For more details about this annex : see Official Journal of the European Patent Office, No. 12/82

page 2 of 2